Europäisches Patentamt

European Patent Office

Office européen des brevets

(19)

(11) Numéro de publication : **0 338 060 B1**

# (12) FASCICULE DE BREVET EUROPEEN

(45) Date de publication du fascicule du brevet :
**26.06.91 Bulletin 91/26**

(51) Int. Cl.⁵ : **A62D 3/00, B09B 3/00, C04B 18/04, G21F 9/00**

(21) Numéro de dépôt : **88909536.0**

(22) Date de dépôt : **03.10.88**

(86) Numéro de dépôt international :
**PCT/FR88/00486**

(87) Numéro de publication internationale :
**WO 89/02766 06.04.89 Gazette 89/08**

---

(54) **PROCEDE DE STABILISATION, DE SOLIDIFICATION ET DE STOCKAGE DE DECHETS.**

---

Le dossier contient des informations
techniques présentées postérieurement au
dépôt de la demande et ne figurant pas dans le
présent fascicule.

(30) Priorité : **02.10.87 US 104190**

(43) Date de publication de la demande :
**25.10.89 Bulletin 89/43**

(45) Mention de la délivrance du brevet :
**26.06.91 Bulletin 91/26**

(84) Etats contractants désignés :
**AT BE CH DE FR GB IT LI LU NL SE**

(56) Documents cités :
**EP-A- 3 026 687**
**DE-A-12 634 839**
**DE-A-12 944 484**
**DE-B-22 426 641**
**FR-A-24 906 26**
**US-A- 4 116 705**
**US-A- 4 509 985**

(73) Titulaire : **Davidovits, Joseph**
**16, rue Galilée**
**F-02100 Saint-Quentin (FR)**

(72) Inventeur : **Davidovits, Joseph**
**16, rue Galilée**
**F-02100 Saint-Quentin (FR)**

---

EP 0 338 060 B1

## Description

Cette invention se rapporte à une méthode de solidification et de stockage de déchets qui sont dangereux ou potentiellement toxiques pour l'homme et l'environnement naturel.

Ces dernières années on a prêté beaucoup attention au problème posé par le stockage à long terme de déchets toxiques, radio-actifs ou non-compatibles avec l'environnement naturel. Ces déchets toxiques et dangereux sont des produits dérivés des industries minières, chimiques, pétrolières, atomiques, et aussi d'autres activités, comme les ordures urbaines.

Dans le cadre de cette invention, le terme déchet désigne exclusivement un rebut ou un résidu contenant des produits toxiques et dangereux pour l'homme et l'environnement naturel. Le terme stabilisation d'un déchet signifie que les éléments toxiques contenus dans ce déchet ont été transformés en une forme chimique qui est devenue stable et résistante au lessivage par les eaux naturelles.

Le terme solidification du déchet toxique désigne la transformation d'un déchet liquide, pâteux, semi-solide, solide, en une masse monolithique dure et mécaniquement résistante.

Par exemple, dans les industries minières, il est nécessaire d'extraire de grande quantité de minéraux pour atteindre le minerai. En général la séparation de la gangue et du minerai a lieu dans une usine située à proximité de la mine, et cette gangue est mise en décharge sur place, dans ce que l'on appelle des bassins de décharge. Ces bassins sont soumis aux aléas des intempéries et aussi aux infiltrations des eaux souterraines ; des eaux polluées passent ainsi dans l'environnement écologique. Les sites de décharge provenant de mines non-métalliques, comme par exemple les mines de potasse, sont caractérisés par une concentration élevée en sel qui peut être lessivé au cours du temps, ce qui augmente considérablement les concentrations en chlorure dans les nappes fréatiques environnantes. Les décharges des mines de charbon et de nombreuses mines métalliques possèdent souvent de très haute teneur en sulfure. L'érosion climatique accompagnée d'oxydation peut aboutir à la formation d'acide sulfurique, lequel pénétrera dans l'environnement écologique, entraînant avec lui de nombreux métaux lourds toxiques.

On utilise ainsi couramment le ciment Portland et d'autres liants inorganiques conventionnels pour solidifier certains déchets toxiques et dangereux, plus particulièrement les déchets liquides radioactifs, quine peuvent être légalement transportés sans avoir été tout d'abord solidifiés. Il faut cependant savoir que ces techniques de solidification furent mises au point essentiellement pour pouvoir transporter, avec plus de sécurité, ces produits dangereux ; elles n'ont pas pour but de conférer une stabilité dans le temps au produit ainsi solidifié.

L'objet principal de cette invention est d'éliminer les désavantages rencontrés jusque maintenant avec les procédés connus de solidification et de stockage. En effet, dans les procédés connus, les éléments toxiques sont tout d'abord traités ou stabilisés chimiquement, puis après la stabilisation, le déchet toxique est solidifié par addition de liant, soit inorganique, soit organique. Au contraire, dans le cas de l'invention, stabilisation et solidification sont réalisées conjointement.

L'objet de cette invention est une méthode pour solidifier et stocker les déchets dangereux. Elle consiste à mélanger et traiter le déchet toxique avec un liant géopolymère obtenu par une activation alcaline de silico-aluminates, dans des proportions telles que l'on obtienne une matrice géopolymèrique de type poly(sialate) (Si-O-Al-O–) et/ou poly(sialate-siloxo) (Si-O-Al-O-Si-O–) et/ou poly(sialate-disiloxo) (Si-O-Al-O-Si-O-Si-O–), la dite matrice géopolymèrique réalisant conjointement à la fois la stabilisation des éléments toxiques et la solidification en un matériau solide et durable ; puis à soumettre ce dit mélange à diverses opérations d'ingénierie, aboutissant à la création d'un matériau possédant une durabilité à long terme, de type archéologique.

Plus particulièrement, dans un cas préféré de l'invention, on mélangera le déchet toxique et le liant géopolymère dans des proportions telles que le rapport molaire des oxydes $Al_2O_3 : M_2O$ du mélange ainsi obtenu soit compris entre 1,5 et 4,0, $M_2O$ représentant $Na_2O$ et/ou $K_2O$ ou le mélange $K_2O + Na_2O$.

La méthode décrite dans cette invention est compatible avec une très vaste variété de déchets toxiques. Elle abouti à l'obtention d'un matériau "déchet" solide possédant une résistance mécanique supérieure et une bien meilleure durabilité dans le long terme.

Après la découverte en Mai 1972 que la mine d'uranium d'Oklo au Gabon pouvait être considérée comme étant un exemple naturel de confinement de déchet radioactif, les études portant sur le stockage des déchets nucléaires s'orientèrent vers le développement de barrière géologique artificielle contenant des minéraux du type des zéolites, différentes argiles, sols et remblais.

L'étude du comportement hydrothermal de ces barrières géochimiques aboutit à découvrir que les alumino-silicates naturels, comme les sols et les argiles, lorsqu'ils se trouvaient en contact avec les nucléides, pouvaient être souvent transformés en minéraux de type feldspathoïde ou zéolitique, aboutissant ainsi à la création in-situ de cette composition minéralogique capable de former cette barrière géologique. Les composés que l'on obtient ainsi à partir des réactions à basse température entre les argiles et les bases alcalines sont du type de la sodalite, la cancrinite et certaines zéolithes. Ces composés sont formés de structure en cage capable de séquestrer

2

les molécules radioactives. On peut aussi faire réagir des déchets radioactifs caustiques avec des argiles comme la bentonite, la kaolinite, l'halloysite et la dickite. Lorsque les conditions réactionnelles sont bonnes et si, ensuite, on ajoute un liant inorganique, on forme un matériau monolithe, solide et dur (voir les études publiées par NTIS, Washington, USA : G.H. Thompson, Report DP-1389, 1975 ; C.H. Delegard et G.Scott Barney, Report ARH-ST-124 et ARH-SA-218, 1975). Par contre si on tente d'assurer la stabilisation et la solidification en une seule opération, comme dans le procédé appelé "Rich Clay Process" décrit dans le Report ARH-124 cité plus haut, on n'obtient pas la stabilité au lessivage ni la solidité requise pour assurer une durabilité dans le temps.

Depuis quelques années on sait comment décontaminer les effluents radioactifs en utilisant des zéolithes synthétiques ou naturelles. D'un autre coté, on utilise des liants minéraux comme le ciment Portland, les liants à base de silicate soluble ou à base de chaux, pour solidifier les zéolithes radioactives ainsi obtenues.

A coté des déchets radioactifs, il existe d'autres catégories de produits dangereux et toxiques comme les métaux lourds. Les études montrèrent, là aussi, que les zéolithes étaient capables d'adsorber ces éléments hautement toxiques. En particulier les zéolithes naturelles, après avoir été transformées en zéolithes alcalines de type sodique par action de soude caustique, se révélèrent très efficaces dans la séquestration des métaux lourds. La séquestration de matériau aussi toxique que le cyanure provenant des industries photographiques fut également obtenue à l'aide de zéolithe. D'autres produits dangereux, comme l'acide sulfureux $SO_2$, et l'acide sulfurique, sont stabilisés également au moyen de zéolithes.

En général, les procédés connus de traitement des déchets toxiques sont des procédés de stabilisation chimique telle que définie plus haut, ensuite, les produits stabilisés sont solidifiés avec des liants. Dans le cadre de l'invention, au contraire, la stabilisation des déchets toxiques a lieu en même temps que la solidification.

Jusqu'à présent, les techniques de solidification et de stockage nécessitaient la mise en pratique de plusieurs méthodes successives permettant la séquestration du déchet toxique dans une masse dure et stable. Ces techniques dérivent toutes des méthodes qui furent mises au point pour le transport des déchets radioactifs. Ainsi par exemple, Le US Department of Transportation avait interdit tout transport de déchet radioactif liquide. La plupart des méthodes employées fournissent des matériaux facilement transportables, car solides, mais très facilement dégradables au contact de l'érosion climatique et de l'environnement naturel. Ainsi par exemple, le moyen préféré de consolidification de ces déchets consiste à utiliser du ciment Portland ou des liants à base de silicates solubles ou à base de chaux. Cependant, cette solidification ne s'accompagne pas obligatoirement des qualités nécessaires et suffisantes pour permettre un stockage sans risque et une stabilité dans le temps.

On admet que ces ciments seront stables dans le temps. Cette affirmation est plus que contestée depuis que l'on a découvert que la stabilité des mortiers et bétons modernes réalisés à base de ciment portland était très mauvaise, surtout en comparaison avec certains mortiers et ciments archéologiques.

Ainsi, sur de nombreux sites archéologiques romains, on peut clairement vérifier que les restaurations effectuées avec le ciment portland sont très dégradées après quelques dizaines d'années, alors que le matériau archéologique datant de plus de 2000 ans reste intact à l'agression climatique et naturelle. Dans le cadre de cette invention, les études effectuées par l'inventeur à Institute for Applied Archaeological Sciences, Barry University, Floride, USA, ont démontré que les ciments pouzzolaniques de l'époque Romaine correspondent à ce que nous appelons maintenant un durcissement "géopolymérique", avec formation d'une matrice géopolymère silico-aluminate de type zéolitique. Ces études comparées des ciments anciens et des ciments modernes de type portland ou géopolymère sont décrites dans la publication "Modern and Ancient Concretes, What the real Difference", Concrete International, Dec. 1987, pp. 23-28. Ces études démontrent l'extraordinaire stabilité des ciments de type géopolymère, par comparaison avec les ciments de type portland.

Les géopolymères et leurs applications sont décrits dans de nombreux brevets déposés par l'auteur de la présente invention. Les liants et ciments géopolymères ont une structure minéralogique voisine de celles des zéolithes et des feldspathoïdes de type sodalite (Brevet Français 2.324.427 ; 2.346.121 ; 2,341,522 ; 2,490,626 ; 2,528,822). Le durcissement peut avoir lieu rapidement en 5 minutes (US 4.509.985 ; EP 153.097), et la structure zéolitique proche de celle de l'analcime, la gmelinite ou la kaliophilite (U.S. 4,349,386 ; US 4,472,199 ; EP 26.687 ; EP 66.571).

Le ciment géopolymère possède une résistance à la flexion deux à trois fois supérieure à celle du ciment portland. Les géopolymères de type Poly(sialate) de Potassium sont résistants au gel, alors que les Poly(sialate) de Sodium, ne résistent pas au gel. Les géopolymères de type Poly(sialate) (–Si-O-Al-O–), Poly(sialate-siloxo) (–Si-O-Al-O-Si-O–) (Poly(sialate-disiloxo) (–Si-O-Al-O-Si-O-Si-O–) peuvent être expansés par des gaz. On obtient ainsi un matériau à cellule ouverte, ayant un caractère zéolitique associé avec de bonne résistance mécanique (Brevet Français 2,512,805).

L'utilisation dans le cadre de l'invention des matrices géopolymères permet donc d'obtenir à la fois la stabilisation chimique des éléments toxiques, grâce à leurs caractéristiques zéolitiques, et la solidification en une masse solide dotée d'une grande stabilité dans le temps, puisque cette matrice est identique à certains matériaux archéologiques qui ont résisté à l'érosion climatique et à l'agression du milieu naturel.

On se rend compte beaucoup plus facilement de l'aspect toxique et dangereux des déchets provenant des activités pétrochimiques et atomiques. Cependant, à l'heure actuelle, on ne connait pas de technique de stockage et de consolidification satisfaisante capable de prévenir le lessivage des substances dangereuses et d'empêcher leur infiltration dans l'environnement immédiat.

Ce que l'on recherche ce sont des techniques de stabilisation à long terme des déchets, c'est à dire essentiellement une résistance au lessivage et à la migration. De nombreuses techniques de stabilisation des déchets à l'aide de liants permettant leur solidification ont été proposées. Cependant, l'utilisation de ces liants conventionnels présente de nombreux défauts.

Ainsi l'asphalte, liant organique thermoplastique, ne peut pas être employé avec des déchets humides, comme les "boues". De tels déchets doivent être sèchés avant de pouvoir être mélangés avec l'asphalte. De plus, le mélange des produits doit être effectué à une température relativement élevée, comprise entre 130°C et 230°C. D'un autre coté, les liants organiques thermodurcissables ont besoin d'un catalyseur fortement acide pour démarrer la polycondensation. Les métaux lourds peuvent se dissoudre très facilement dans ce catalyseur acide et peuvent être lessivés avant le début du durcissement et leur emprisonnement dans la masse. De plus, ces polymères organiques sont biodégradables, ce qui ne leur confère pas une durabilité dans le temps.

De la même façon les liants inorganiques conventionnels créent également des problèmes. Ainsi le ciment Portland, les liants à base de silicate soluble, tout comme les liants à base de chaux (dit aussi pouzzolaniques) sont incompatibles avec une grande variété de déchets, comme par exemple : les sels sodiques arsenates, borates, phosphates, iodates, et sulfures ; les sels de magnesium, d'étain, de zinc, de cuivre, de plomb ; les argiles et les limons ; le charbon et la lignite.

L'agglomération de ces déchets toxiques est difficile et, même une fois durcie, leur masse ne reste pas solide longtemps, dans le temps. De plus, ces liants sont dégradés par les infiltrations de solutions acides. Si l'on se trouve en présence de fortes concentrations en sulfures oxydés, celles ci arrivent à décomposer le matériau qui a été durci, accélérant ainsi le processus de dégradation et de lessivage des substances dangereuses.

Dans la description qui suit, le terme "liant géopolymère silico-aluminate alcalin" (ou plus simplement "géopolymère") désigne un liant inorganique à base de l'oxyde alumino-silicate ($Si_2O_5$, $Al_2O_2$). Dans cet oxyde alumino-silicate ($Si_2O_5$, $Al_2O_2$) l'aluminium se trouve en grande partie en coordination IV. Il est donc très différent des alumino-silicates ordinaires ($2SiO_2$, $Al_2O_3$) dont l'aluminium est en majorité en coordination VI. On obtient cet oxyde alumino-silicate soit par calcination du kaolin ou de minéraux qui contiennent des minéraux kaolinitiques, les bauxites, et on le trouve aussi dans les sous-produits industriels finement pulvérulents provenant des fumées d'électrofusion de matériaux alumineux, ainsi que dans certaines cendres volantes.

On trouvera des exemples de préparation et d'utilisation de ces liants géopolymères dans les brevets déposés par le présent inventeur, cités plus haut, ainsi que d'autres brevets dérivés, comme par exemple : US 4.522.652 ; US 4.533.393 ; US 4.608.795 ; US 4.640.715 ; US 4.642.137 ; DE 3.512.515 et EP 199.941, brevets que nous citons ici à des fins de référence.

Ces liants géopolymères furent développés essentiellement pour l'obtention de produits à haute résistance destinés à l'industrie du bâtiment, des bétons, des produits de revêtement, les industries métallurgiques.

On vient maintenant de découvrir que ces liants géopolymères sont extrêmement intéressants et doués d'excellentes propriétés pour stabiliser et solidifier conjointement les déchets toxiques et dangereux, avec obtention d'un matériau stockable pendant des périodes pouvant atteindre les ages archéologiques, sans dégradation.

Lorsque l'on mélange un déchet toxique avec suffisamment de liant géopolymère silico-aluminate alcalin, on obtient un matériau contenant une matrice géopolymérique du type poly(sialate) (–Si-O-Al-O–) et/ou poly(sialate-siloxo) (–Si-O-Al-O-Si-O–) et/ou poly(sialate-disiloxo) (–Si-O-Al-O-Si-O-Si-O–). Ce matériau possède des propriétés zéolitiques et est doté d'une stabilité à long terme, associée à d'excellentes caractéristiques mécaniques.

Les matrices géopolymériques obtenues dans le cadre de cette invention sont, de part leur constitution, proches des zéolites et feldspathoïdes naturels et synthétiques. En conséquence, ces matériaux peuvent immobiliser et piéger la grande majorité des substances dangereuses. Parmi les substances pouvant être immobilisées, on peut citer, à titre non limitatif et simplement indicatif : l'arsenic, le cadmium, le chrome, le mercure, le plomb, le baryum, le soufre, le cyanure, les sulfures et les substances radio-actives. Ces éléments se trouvent piégés à l'intérieur de la structure tri-dimensionnelle du matériau géopolymère silico-aluminate. En plus de leurs qualités sequestrantes, les géopolymères permettent de transformer un déchet toxique de consistance semi-solide, en un matériau aggloméré, monolithe et dur. La solidification géopolymérique décrite dans cette invention possède les deux caractéristiques essentielles à l'élaboration d'une méthode de stockage efficace des déchets dangereux ou potentiellement dangereux.

De plus, ces liants géopolymères produisent une structure solidifiée qui possède une résistance aux intempéries et à l'érosion climatique très supérieure à celle donnée par le ciment Portland moderne. Des études comparatives effectuées sur des restaurations modernes de monuments archéologiques datant de l'époque Romaine, ont montré que le ciment Portland moderne est très détérioré par l'érosion climatique et naturelle, et qu'il se trouve déjà dégradé après seulement environ cinquante années. Au contraire, les ciments romains, ne sont pas dégradés par cette même érosion climatique et naturelle, même après 2.000 années, puisqu'ils sont encore justement sur le site archéologique. Nos études ont montré que le ciment utilisé par les Romains, à base de formulation pouzzolanique, correspondait en fait à un mécanisme de prise similaire à celui qui caractérise les liants géopolymères silico-aluminates à activation alcaline.

Dans la publication scientifique citée plus haut (1987) on a montré que les anciens mortiers comprenaient une matrice géopolymèrique de type analcime, phillipsite ou sodalite. La calcite ($CaCO_3$) qui résulte de la carbonatation de la chaux CaO joue le rôle d'une charge fine inerte incluse dans cette matrice géopolymèrique. L'analyse chimique de ces mortiers et ciments géopolymère-chaux permet de connaître la valeur de l'activation alcaline, ou géopolymérisation, à l'aide des valeurs du rapport molaire des oxydes $Al_2O_3$ : $Na_2O + K_2O$. Les valeurs qui caractérisent les ciments anciens grecques (360-300 a. J.C.) sont comprises entre 1,83 et 3,77, pour les ciments anciens romains (160-140 a. J.C.) comprises entre 2,08 et 2,14, et pour les ciments anciens de Syrie (env. 7,000 a. J.C.) d'environ 1,92.

A partir de ces valeurs, on peut déduire que la stabilité à long terme des liants géopolymères est une fonction du rapport molaire $Al_2O_3$ : $Na_2O + K_2O$ et que, dans le cadre de cette invention, ce rapport doit être, de préférence compris entre 1,5 et 4,0 afin de conférer une durabilité à long terme, de type archéologique.

En plus de cette stabilité à long terme, les liants géopolymères présentent d'autres avantages. On obtient des résistances mécaniques qui sont 2 à 3 fois supérieures à celles du ciment Portland. La durée de prise peut être très rapide, de l'ordre de 5 minutes. Les géopolymères de type Poly(sialate) de Potassium sont très résistants au gel et dégel. Les géopolymères poly(sialate) et poly(sialate-siloxo) peuvent être expansés à l'aide d'agent d'expansion ou de gaz.

Le durcissement du mélange géopolymère-déchet se fait à température ambiante. Il peut cependant être accéléré, en élevant la température à 40-90°C. Pour certaines formes de déchet, en particulier riche en argile, il sera aussi avantageux de durcir le mélange géopolymère-déchet, en appliquant simultanément température (entre 95°C et 180°C) et pression. La matrice géopolymèrique ainsi obtenue est du type de la sodalite, conformément au procédé décrit dans les brevets français FR 2.324.427 et FR 2.346.121 et les brevets allemands DE 25.00.151 et DE 26.21.815.

Lorsque le pH du déchet le permet, on pourra ajouter au mélange géopolymère-déchet d'autres types de liants inorganiques conventionnels, comme le ciment portland, la chaux, le silicate. On conserve ainsi les qualités intrinsèque de l'invention, tout en augmentant le rendement économique de l'opération.

Dans le cadre de l'invention, le laitier de haut-fourneau n'est pas considéré comme faisant partie des liants inorganiques conventionnels. On sait en effet que l'activation alcaline du laitier de haut fourneau, par l'intermédiaire d'une base comme NaOH et KOH, conduit à la formation de zéolites de type analcime ou phillipsite. Cette propriété est d'ailleurs utilisée dans le liant géopolymère décrit dans le brevet EP 153.097. De même, les pouzzolanes naturelles réagissent avec formation de zéolites et pourront donc être ajoutées au liant géopolymère.

Pour assurer le stockage, le mélange géopolymère-déchet est soumis avant, ou pendant le durcissement, à des opérations connues d'ingénierie, comme par exemple le coulage, la compression, le moulage, l'épandage, le compactage. On peut aussi utiliser le mélange géopolymère-déchet dans la réalisation de structures comme des revêtements, couvertures, barrières géochimiques, mise en place sur les sites de stockage et de dépôt.

Les exemples qui suivent permettent de mieux comprendre l'invention. Ils ont été choisis à titre simplement d'exemple et n'ont pas de caractère limitatif de l'étendue de l'invention. Dans les exemples, les pourcentages correspondent à des parties en poids, sauf si indiqué autrement.

Exemple 1 :

On choisit quatre échantillons de déchets miniers représentatifs des matières qui, jusque maintenant, ne peuvent pas être solidifiées avec les liants minéraux traditionnels. Ces quatre échantillons sont :
1) mine métallifère (haute contenance en sulfures), pH = 1.5-2.0 la gangue siliceuse est composée de :

| | |
|---|---|
| minéraux siliceux | 85% |
| pyrite ($FeS_2$) | 7% |
| baryte ($BaSO_4$) | 5% |

le reste étant composé de petites quantités de métaux lourds, toxiques

2) mine de potasse (haute teneur en Nacl)

3) mine de charbon (haute teneur en sulfures), pH = 2,0

4) mine d'uranium (haute teneur en arséniures, sulfures, et nucléides), pH = 2,5

On extrait l'uranium de la gangue siliceuse, par une opération de lessivage. Le résidu restant contient certaines quantités d'uranium, pyrite, de métaux (Se, Pb, As, Cd, Mo), sels minéraux ($F-$, $NO_3-$, $Cl-$), et plusieurs produits de fission. Parmi les radio-isotopes, le Radon 226, Thorium 230 et Plomb 210, sont ceux qu'il faut particulièrement surveillés. Parmi les minéraux, la pyrite et la pyrrhotite peuvent avec le temps être oxydés, se transformant en $H_2SO_4$ et $Fe3+$ qui vont solubiliser les radionucléides et les métaux lourds qui pourront ainsi migrer dans l'environnement écologique.

Le liant géopolymère employé dans cet exemple est un produit commercial, la GEOPOLYMITE 50, fabriqué par la société française GEOPOLYMERE s.a.r.l., selon le brevet EP 153.097. Il est habituellement utilisé comme résine minérale dans la réalisation de moules ou d'outils et accessoires réfractaires pour l'industrie de l'Aluminium, ou pour l'imprégnation de fibres composites minérales. La GEOPOLYMITE 50 est un liant à deux composants A et B. Le géopolymère obtenu avec ce liant est du type Poly(sialate-siloxo) de Potassium et de Calcium, (K, Ca)-(Si-O-Al-O-Si-O-), et le rapport molaire $Al_2O_3/K_2O = 0,90$.

En général, les déchets miniers proviennent de résidus de bassins de décantation. Ils sont donc très humides.

Le mode opératoire, identique pour chaque déchet minier, est le suivant :

On prend 32,5 kg de déchet minier et on y mélange 50 kg de sable. Séparément, on prépare le liant géopolymère en mélangeant 8,75 kg de GEOPOLYMITE (A) avec 8,75 kg de GEOPOLYMITE (B). On laisse maturer le mélange A + B pendant 30 minutes avant de l'ajouter dans le mélangeur contenant le sable et le déchet minier. On obtient une sorte de béton que l'on coule dans des moules, en les vibrant pour expulser les bulles d'air. Puis on laisse durcir à la température ambiante. Les échantillons sont ensuite testés au bout de 24 heures et 28 jours (résultats reproduits dans le Tableau I.)

La stabilité au lessivage est le critère le plus important. Le test est celui préconisé par la Regulation 309, R.R.O. 1980, du Ministère de l'Environnement de la Province de l'Ontario, Canada, amendé par Regulation 464/85 du Environmental Protection Act, R.S.O. 1980. Les échantillons sont écrasés et broyés et tamisés, refus supérieur à 9,5 mm, puis laissés à digérer pendant 24 heures, sous agitation, dans une solution d'acides acétique et nitrique. On filtre et on analyse les éléments qui se trouve dissous dans le filtrat.

## TABLEAU I

### STABILITE AU LESSIVAGE ACIDE

| DECHET MINIER | NON TRAITE PPM | GEOPOLYMERISE | |
| | | 24 Heures PPM | 21 Jours PPM |
| --- | --- | --- | --- |
| POTASSE | | | |
| NaCl+KCl | 60.000 | | Na: 3.100 |
| | | | Cl: 7.440 |
| URANIUM | | | |
| Ra226 | 300pCi/1 | | 18,7pCi/1 |
| METALLIFERE | | | |
| Fe | 9.730 | 123 | 0,06 |
| Cd | 2,01 | 0,26 | 0,014 |
| Co | 18,90 | 16,10 | 0,16 |
| Cr | 90 | 45,36 | 0,01 |
| Cu | 210 | 4,05 | 0,19 |
| Mo | 0,15 | 0,08 | 0,06 |
| Ni | 13,26 | 10,90 | 0,03 |
| Pb | 3,95 | 1,59 | 0,02 |
| V | 2,4 | 2,20 | 0,10 |
| Zn | 802,62 | 484,12 | 3,10 |

Tous les éléments toxiques présents dans chacun des déchets miniers ont été piégés dans la matrice géopolymère. Le béton obtenu avec ces déchets consolidés au géopolymère a une résistance à la compression de 20 MPa après 21 jours.

Si, au lieu de durcir à température ambiante, on durcit à 60°C, pendant 4 heures, on obtient un béton géopolymèrique ayant une résistance à la compression de 28 à 40 MPa. Ce béton géopolymèrique peut être employé pour réaliser, sur le site de stockage des déchets miniers, diverses structures et ouvrages de génie civil.

La gangue silico-alumineuse, argileuse ou limoneuse, des déchets miniers contient entre cinq et dix pour cent en poids de $Al_2O_3$. On pense que les fines particules silico-alumineuses de cette gangue participent à la réaction de géopolymèrisation. Il en résulte que, dans la matrice géopolymèrique, le rapport molaire réel $Al_2O_3$: $K_2O$ est compris entre 1,63 et 2,43, ce qui assure une durabilité à long-terme, de type archéologique.

Exemple 2 :

Le déchet métallifère est riche en Arsenic As, contenant environ 400-300 PPM. On le solidifie avec différentes quantités de GEOPOLYMITE 50. On mesure la stabilité au lessivage des produits selon le test de l'Exemple 1., seulement au bout de 24 heures, Tableau II :

TABLEAU II

GEOPOLYMERISATION 24 HEURES

STABILITE DE L'ARSENIC

% en poids de GEOPOLYMITE 50

| NON TRAITE | 10% | 15% | 20% | 25% | 30% |
|---|---|---|---|---|---|
| 42,72 PPM | 0,8 PPM | 0,3 PPM | 0,4 PPM | 0,5 PPM | 1,1PPM |

On constate que plus la quantité de GEOPOLYMITE augmente, plus mauvaise est la stabilité de l'arsenic. On peut penser que avec l'augmentation de la GEOPOLYMITE, on augmente la quantité d'arsenate de potassium, soluble, qui ne réagit pas avec la matrice géopolymèrique. Ceci semble surprenant, car il est connu que l'arsenate de potassium forme un complexe chimique avec l'Hydroxyde d'alumime $Al(OH)_3$, transformant le cation Al de coordination VI en cation Al de coordination IV. Cette réaction permet la synthèse de certaines zéolithes, tout comme d'ailleurs d'autres produits complexant de l'aluminium tels que les phosphates, oxalates, humates, chromates. Le piégeage complet de ces agents complexants semblent donc nécessiter la présence d'Al en coordination VI, quine se trouve pas en quantité suffisante dans le mélange réactionnel géopolymèrique employé dans les Exemples 1) et 2).

Exemple 3 :

Les déchets liquides peuvent également être facilement traités et solidifiés avec le procédé selon l'invention.

On prépare une solution toxique, artificielle, contenant les produits toxiques suivants, dans 1 litre d'eau :

| | |
|---|---|
| Arsèniure de Sodium | 5,20 g |
| Nitrate de Cadmium trihydrate | 10,70 g |
| Chlorure de Chrome (solut. 45%) | 14,00 g |
| Nitrate de Plomb | 13,20 g |
| Phenol | 3,80 g |

On ajoute à cette solution toxique 220 g de fumée de silice (sous-produit de la métallurgie des aciers spéciaux ferro-silicones) à 90% de $SiO_2$ et 340 g de d'Hydroxyde de Potassium (90% de KOH). On obtient ainsi une solution contenant du silicate de potassium. Ce mode de préparation de silicate alcalin (verre soluble) à partir de fumée de silice, sous-produit ferrosilicone, a été décrit dans de nombreux brevets, comme par exemple les brevets Japonais JP 74134599 et JP 75150699.

A la solution précédente on ajoute la partie B de la GEOPOLYMITE 711, produit à base géopolymère fabriqué par la société française GEOPOLYMERE SARL, selon le brevet EP 66.571. La partie B de la GEOPOLYMITE 711 contient, en plus de l'oxyde alumino-silicate $(Si_2O_5, Al_2O_2)$ dont Al est en coordination IV, un alumino-silicate $(2SiO_2, Al_2O_3)$ dont 80% du cation Al sont en coordination VI. On obtient une résine géopolymère contenant les produits toxiques, dont la composition est la suivante :

ANALYSE CHIMIQUE DU MELANGE TOXIQUE-GEOPOLYMITE 711/B

| | |
|---|---|
| $SiO_2$ | 31,52 |
| $Al_2O_3$ | 16,79 |
| $Fe_2O_3/TiO_2$ | 1,08 |
| $K_2O$ | 11,19 |
| CaO | 5,15 |
| F- | 6,76 |
| $H_2O$ | 27,76 |

100 g du mélange toxique-GEOPOLYMITE 711/B sont mélangés avec 200 g de sable. Le béton géopolymèrique ainsi obtenu est durci dans un moule, à 60°C pendant 4 heures. Les tests de stabilité montrent que tous les métaux lourds ont été piégés dans la matrice géopolymère. L'Arsenic a également été piégé. La perméabilité à l'eau est très faible puisque la conductivité hydraulique est inférieure à 10-10 m/s. La résistance à la compression est de 30-35 MPa.

Le rapport molaire $Al_2O_3 : K_2O$ de la matrice géopolymère est 1,38 et confère une bonne stabilité dans le temps. Celle-ci peut encore être augmentée pour pouvoir atteindre des ages archéologiques comparables aux ciments anciens. Pour cela il faut ajouter suffisamment de matériau contenant de l'Aluminium (exprimé ici en oxyde $Al_2O_3$, uniquement pour mettre en évidence le rapport molaire $Al_2O_3 : M_2O$). La stabilité de type archéologique sera atteinte si le rapport molaire des oxydes $Al_2O_3 : M_2O$ est compris entre 1,5 et 4,0, dans lequel $M_2O$ représente $Na_2O$ et/ou $K_2O$, ou la somme $Na_2O + K_2O$.

Par contre, les fragments de roches, ou agrégats, que peuvent contenir les déchets, ne participent pas à la formation de la matrice géopolymèrique. Ce sont des charges inertes. Leur composition chimique exprimée en $Al_2O_3$, $Na_2O$, $K_2O$, n'est pas prise en compte dans la détermination du rapport molaire $Al_2O_3 : M_2O$ de la présente invention. Dans le cadre de l'invention, $M_2O$ provient soit d'hydroxyde de sodium NaOH, soit d'hydroxyde de potassium KOH, ou le mélange KOH + NaOH, soit de produits susceptibles de produire NaOH et/ou KOH, dans la matrice géopolymèrique. $M_2O$ provient aussi de silicates alcalins solubles dans l'eau ou de produits susceptibles de produire des silicates alcalins solubles, dans la matrice géopolymèrique.

$Al_2O_3$ provient à la fois de l'oxyde alumino-silicate $(Si_2O_5, Al_2O_2)$ avec Al en coordination IV, et de l'alumino-silicate $(2SiO_2, Al_2O_3)$ avec Al en coordination VI. Ce dernier peut être un matériau hydroxylé naturel présent dans les argiles, les limons et les gangues minérales, ou les argiles calcinées ou simplement déshydroxylées. Il peut également se trouver dans les minéraux riches en alumines, comme les bauxites, latérites. Il peut aussi, plus simplement provenir de la réaction entre une silice hydratée, et de l'Hydroxyde d'alumine, $Al(OH)_3$, $AlO(OH)$.

Une application économique intéressante de l'invention consiste en ce que dans le dit liant géopolymère silico-aluminate alcalin, les produits siliceux, silico-alumineux ou alumineux, proviennent de sous-produits industriels sélectionnés, entre autres parmi d'une part les fumées et cendres des centrales thermiques, des fours métallurgiques ferro-silicone, des fours à électro-fusion de produits siliceux et silico-alumineux, d'autre part les résidus de l'industrie d'extraction et de transformation de la bauxite, auxquels on pourra ajouter les laitiers métallurgiques et les pouzzolanes naturelles.

## Revendications

1. Procédé de stabilisation, de solidification et de stockage de déchets contenant des éléments toxiques et dangereux pour l'homme et l'environnement naturel, procédé par lequel on prépare séparément un liant géopolymère silico-aluminate alcalin, que l'on mélange ensuite avec le dit déchet contenant des éléments toxiques et dangereux, dans des proportions telles que l'on obtienne un mélange contenant in-situ une matrice géopolymérique de type poly(sialate) (–Si-O-Al-O–) et/ou poly(sialate-siloxo) (–Si-O-Al-O-Si-O), et/ou poly(sialate-disiloxo) (–Si-O-Al-O-Si-O-Si-O), la dite matrice géopolymérique réalisant conjointement à la fois la stabilisation des dits éléments toxiques et la solidification en un matériau solide doté d'une stabilité dans le temps au moins équivalente à celles des matériaux archéologiques, caractérisé en ce que dans la dite matrice géopolymèrique le rapport molaire $Al_2O_3 : M_2O$ est compris entre 1,5 et 4,0, $M_2O$ représentant soit $Na_2O$ ou $K_2O$, ou le mélange $Na_2O + K_2O$.

2. Procédé selon 1) caractérisé en ce que $M_2O$ provient soit d'Hydroxyde de sodium NaOH, soit d'Hydroxyde de potassium KOH, ou le mélange NaOH + KOH, ou de produits susceptibles de produire NaOH et/ou KOH, dans la dite matrice géopolymèrique.

3. Procédé selon 1) caractérisé en ce que $M_2O$ provient de silicates alcalins solubles dans l'eau ou de produits susceptibles de produire des silicates alcalins solubles, dans la dite matrice géopolymèrique.

4. Procédé selon 1) caractérisé en ce que $Al_2O_3$ provient d'un oxyde alumino-silicate $(Si_2O_5, Al_2O_2)$ dont le cation Al est en coordination IV.

5. Procédé selon 4), caractérisé en ce que le dit mélange contient additionnellement des silico-aluminates naturels ou synthétiques ne possédant qu'une très faible quantité de cation Al en coordination IV dans leur couche octahédrique.

6. Procédé selon l'une quelconque des revendications 1) à 5) caractérisé en ce que dans le mélange on ajoute des liants inorganiques traditionnels comme le ciment portland, la chaux.

## Claims

1. A method for the stabilisation, solidification and disposal of wastes containing elements which are toxic and hazardous for mankind and nature, comprising the steps of preparing an alkali alumino-silicate geopolymer binder, mixing said binder with said toxic and hazardous waste in proportion such that a mixture is made having in situ a geopolymeric matrix of the poly(sialate) (–Si-O-Al-O–) and/or poly(sialate-siloxo) (–Si-O-Al-O-Si-O–) and/or poly(sialate-disiloxo) (–Si-O-Al-O-Si-O-Si-O–) types, said geopolymeric matrix providing simultaneously the stabilisation of said toxic elements and the solidification of said waste to produce a solid material having archaeological long term stability, wherein in said geopolymeric matrix the molar ratio of oxides $Al_2O_3 : M_2O$ is in the range of 1,5 to 4,0, where $M_2O$ is $Na_2O$ or $K_2O$ or the mixture $Na_2O + K_2O$.

2. The method of claim 1 wherein said oxide $M_2O$ is provided by sodium hydroxide NaOH, or potassium hydroxide KOH, or a mixture NaOH + KOH, or products producing NaOH and/or KOH in said geopolymeric matrix.

3. The method of claim 1 wherein said oxide $M_2O$ is provided by water soluble alkali silicates or products producing water soluble alkali in said geopolymeric matrix.

4. The method of claim 1 wherein said oxide $Al_2O_3$ is provided by an alumino-silicate oxide ($Si_2O_5$, $Al_2O_2$) with the cation Al in 4-fold coordination.

5. The method of claim 4 wherein said mixture comprises additional natural or synthetic alumino-silicates with very low amount of cation Al in 4-fold coordination in their octahedric layer.

6. The method of any of claims 1 to 5 wherein in said mixture are further added conventional inorganic binders such as portland cement and lime.

## Ansprüche

1. Verfahren für die Stabilisierung, Verfestigung und Endlagerung toxischer und anderer, für den Menschen und die natürliche Umwelt gefährlicher Abfallstoffe. Bei dem Verfahren wird getrennt ein geopolymerer Binder aus alkalischem Silikoaluminat zubereitet, den man dann mit dem besagten – toxische und gefährliche Elemente enthaltenden – Abfallstoff mischt, in einem gewissen Verhältnis, um in situ eine Mischung zu erhalten, mit einer Matrix aus Geopolymer vom Typus poly(sialat) (–Si-O-Al-O–) und/oder poly(sialat-siloxo) (–Si-O-Al-O-Si-O), und/oder poly(sialat-disiloxo) (–Si-O-Al-O-Si-O-Si-O), besagte geopolymere Matrix erbringt sowohl die Stabilisierung besagter toxischer Elemente, wie auch die Verfestigung in ein dauerhaftes Material, das durchaus mit der Dauerhaftigkeit archeologischen Materials zu vergleichen ist, dadurch gekennzeichnet, dass in besagter geopolymerer Matrix ein Molverhältnis $Al_2O_3 : M_2O$ zwischen 1,5 und 4,0, vorliegt : $M_2O$ bedeutet hierbei entweder $Na_2O$ oder $K_2O$, oder eine Mischung von $Na_2O + K_2O$.

2. Verfahren nach Anspruch 1) dadurch gekennzeichnet, dass $M_2O$ aus Natriumhydroxyd NaOH oder Kaliumhydroxyd KOH oder einer Mischung von beiden, NaOH + KOH herrührt oder aus Stoffen -in der besagten geopolymeren Matrix- kommt, die fähig sind NaOH und/oder KOH zu produzieren.

3. Verfahren nach Anspruch 1) dadurch gekennzeichnet, dass $M_2O$ aus wasserlöslichen, alkalischen Silikaten herrührt, oder aus Stoffen -in der besagten geopolymeren Matrix-kommt, die fähig sind wasserlösliche alkalische Silikate zu produzieren.

4. Verfahren nach Anspruch 1) dadurch gekennzeichnet, dass $Al_2O_3$ aus einem Aluminium-Silikat Oxyd herstammt, bei dem das Kation Aluminium sich in IV-facher Koordination befindet.

5. Verfahren nach Anspruch 4) dadurch gekennzeichnet, dass in der besagten Mischung sich zusätzlich natürliche oder synthetische Silicoaluminate befinden, die eine sehr schwache Anzahl des Kations Aluminium in IV-facher Koordination in ihrer oktaedrischen Anordnung besitzen.

6. Verfahren nach irgend einem der Ansprüche 1) bis 5) durch den Zusatz traditioneller Binder wie Portlandzement, Kalk in seiner Mischung gekennzeichnet ist.